# EUROPÄISCHE PATENTSCHRIFT

(11) **EP 3 114 374 B1**
(45) Veröffentlichungstag und Bekanntmachung des Hinweises auf die Patenterteilung: **26.02.2020**
(21) Anmeldenummer: 14827720.5
(22) Anmeldetag: 11.12.2014
(51) Int. Cl.: F16H 63/30, F16H 63/38, F16H 61/24

(54) **SCHALTVORRICHTUNG**
SHIFTING DEVICE
DISPOSITIF DE CHANGEMENT DE VITESSE

(30) Priorität: 06.03.2014 DE 102014204095
(43) Veröffentlichungstag der Anmeldung: 11.01.2017
(73) Patentinhaber: Schaeffler Technologies AG & Co. KG, 91074 Herzogenaurach (DE)
(72) Erfinder: SCHWARZ, Uwe, 91052 Erlangen (DE); LÖFFELMANN, Jochen, 91330 Eggolsheim (DE)
(86) Internationale Anmeldenummer: PCT/DE2014/200701
(87) Internationale Veröffentlichungsnummer: WO 2015/131864

(56) Entgegenhaltungen:
- WO-A1-2013/178428
- DE-A1- 10 144 979
- DE-A1-102011 089 054
- US-A1- 2013 239 729

## Beschreibung

### Gebiet der Erfindung

Die Erfindung betrifft eine Schaltvorrichtung für ein Wechselgetriebe eines Kraftfahrzeugs, mit einer Schaltwelle, die entlang ihrer Längsachse in eine Wählrichtung verschiebbar und mittels eines Schalthebels um ihre Längsachse in eine Schaltrichtung drehbar ist, wobei die Schaltwelle (3) in Längsrichtung geteilt ausgebildet ist und eine fest mit dem Schalthebel (2) verbundene Primärwelle (11) und eine fest mit wenigstens einer Schalthülse (9) und/oder mit wenigstens einer Rastierhülse verbundene Sekundärwelle (12) aufweist.

### Hintergrund der Erfindung

Eine derartige Schaltvorrichtung ist aus der DE 10 2011 007 251 A1 bekannt. Die Schaltvorrichtung umfasst eine einteilige Schaltwelle, die mittels eines Wählhebels axial verschiebbar ist. Auf diese Weise wird eine bestimmte Gasse in einem Getriebe ausgewählt. Zusätzlich ist ein schwenkbarer Schalthebel vorgesehen, um die Schaltwelle zu verdrehen, wodurch ein Gang des Wechselgetriebes eingelegt oder geschaltet wird. Die beiden Hebel sind jeweils über einen Seilzug oder ein Gestänge mit einem Handschalthebel im Fahrzeuginnenraum verbunden. Mehrteilige Schaltwellen gehen unter anderem aus DE 101 44 979 A1 oder US 2013/0239729 A1 hervor. DE 10 2011 089 054 A1 zeigt eine gattungsgemäße zweiteilige Schaltwelle, die fest verbunden sind, so dass die Einheit extern eingeleitete Vibrationen überträgt.

Um die Übertragung von Vibrationen zu vermindern, zeigt WO 2013/178428 A1 eine einteilige Schaltwelle mit einer auf der Schaltwelle schwingungsentkoppelt angeordneten Hülse. Beide Bauteile sind axial zueinander verschiebbar und über einen komplementär ausgebildeten Vorsprung aneinander koppelbar.

Daneben ist eine modifizierte Schaltvorrichtung bekannt, bei der ein Schaltgewicht mit einem Tilger oder Tilgerelement versehen ist, um einen harten Endanschlag bei einer Schaltbetätigung zu dämpfen und um aus dem Getriebe übertragene Schwingungen oder Stöße zu reduzieren. Dadurch soll erreicht werden, dass der Fahrer ein Vibrieren des Schalthebels weder sieht noch spürt. Die dämpfenden Eigenschaften des Tilgers reduzieren die Massenträgheitskräfte des Schaltgewichts und schonen dadurch in der Schaltvorrichtung vorgesehene Endanschläge. Bei dieser bekannten Schaltvorrichtung wird das Schaltgewicht inklusive des Dämpfers nur während des Schaltvorgangs, nicht jedoch beim Anwählen der Schaltgasse bewegt, dadurch steigen allerdings der Bauaufwand und die Kosten.

Der Erfindung liegt daher die Aufgabe zugrunde, eine Schaltvorrichtung anzugeben, die eine Übertragung von Vibrationen weitestgehend vermeidet und die dennoch kostengünstig herstellbar ist.

### Zusammenfassung der Erfindung

Zur Lösung dieser Aufgabe ist bei einer Schaltvorrichtung der eingangs genannten Art erfindungsgemäß vorgesehen, dass die Primärwelle und die Sekundärwelle derart miteinander verbunden sind, dass ein eine Drehung um die Längsachse ermöglichendes Spiel vorhanden ist.

Die Erfindung beruht auf der Erkenntnis, dass Vibrationen, die bei herkömmlichen Schaltvorrichtungen vom Getriebe über Schaltgabeln auf Schaltfinger, die an Schalthülsen angebracht sind, übertragen werden, durch eine Zweiteilung der Schaltwelle vermieden werden können, wobei die beiden Teilwellen derart miteinander gekoppelt sind, dass sie um ihre Längsachse, d. h. in Umfangsrichtung, relativ zueinander zumindest geringfügig drehbar sind. Diese Drehbarkeit wird durch das Vorsehen von Spiel ermöglicht. Durch diese Maßnahme wird die Übertragung von Schwingungen und Vibrationen vom Getriebe über die Schaltvorrichtung zu einem im Fahrzeuginneren angeordneten Schalthebel weitgehend unterdrückt oder zumindest soweit abgeschwächt, dass am Schalthebel keine nennenswerten Vibrationen spürbar sind,

Um die Erfindung umzusetzen, wird es bevorzugt, dass die Primärwelle und die Sekundärwelle über eine Muffe miteinander gekoppelt sind, die entweder mit der Primärwelle oder mit der Sekundärwelle fest verbunden ist. Die Muffe ist ein rohrförmiger Körper, die mit einer Welle fest verbunden ist. Vorzugweise erstreckt sich die Muffe teilweise über das freie Ende derjenigen Welle hinaus, mit der die Muffe fest verbunden ist. Somit bildet der überstehende Teil der Muffe eine Führung für die andere Welle, die nicht fest mit der Muffe verbunden ist und gegenüber der die andere Welle zumindest geringfügig rotativ bewegbar ist. Erfindungsgemäß wird es bevorzugt, dass die als rohrförmiger Körper ausgebildete Muffe fest mit der Sekundärwelle verbunden ist, wobei ein Ende der Muffe eine Führung für die Primärwelle bildet.

Es liegt auch im Rahmen der Erfindung, dass die Primärwelle oder die Sekundärwelle eine Nut aufweist, in die ein Sicherungselement einsetzbar oder eingesetzt ist, durch das die Welle mit der Muffe verbunden ist. Das Sicherungselement verbindet die beiden Wellen in Axialrichtung miteinander, wohingegen die radiale Verbindung der beiden Wellen spielbehaftet ist. Die axiale Verbindung stellt sicher, dass die über den Schalthebel vom Benutzer eingeleiteten Schaltbetätigungen zu der Schalthülse bzw. dem Schaltfinger geleitet werden, wodurch der gewünschte Schaltvorgang ausgelöst wird,

Erfindungsgemäß wird es bevorzugt, dass das Sicherungselement als Sicherungsring oder Sprengring oder Nutenring ausgebildet ist. Dadurch ergibt sich der Vorteil, dass das Sicherungselement an einer der beiden Wellen vormontiert werden kann, durch axiales Einsetzen oder Einclipsen der anderen Welle kann die benötigte axiale Verbindung im Rahmen der Montage einfach hergestellt werden.

Um die für einen Schaltvorgang benötigte Verdrehung der beiden gekoppelten Wellen zu erzielen, wird es erfindungsgemäß bevorzugt, dass die mit der Primärwelle oder der Sekundärwelle gekoppelte Muffe einen Mitnehmer aufweist, der in eine Ausnehmung eines sich radial von der anderen Welle erstreckenden Bunds eingreift, wobei zwischen dem Mitnehmer und der Ausnehmung Spiel vorhanden ist. Generell kann die benötigte radiale Kopplung durch zwei zusammenwirkende Teile bewirkt werden, die einen Form- und/oder Kraftschluss ermöglichen. Obwohl ein Mitnehmer in Form eines in einer Ausnehmung eingreifenden Vorsprungs bevorzugt wird, sind auch andere Ausgestaltungen möglich, die eine radiale Kopplung sicherstellen.

Zur Vereinfachung der Fertigung wird es bei der erfindungsgemäßen Schaltvorrichtung bevorzugt, dass der Bund Bestandteil einer fest mit der jeweiligen Welle verbundenen Hülse ist. Dabei wird es bevorzugt, dass die Hülse mit der Primärwelle verbunden ist, dementsprechend weist die Sekundärwelle den Mitnehmer auf.

Eine ganz besonders zuverlässige Funktion ergibt sich, wenn die Muffe der erfindungsgemäßen Schaltvorrichtung mehrere, vorzugsweise zwei gegenüberliegende Mitnehmer und der Bund eine entsprechende Anzahl, vorzugsweise zwei gegenüberliegende Ausnehmungen aufweist.

### Kurze Beschreibung der Zeichnung

Ein Ausführungsbeispiel der Erfindung ist in der Zeichnung dargestellt und wird im Folgenden näher beschrieben. Es zeigen:
- Figur 1: die wesentlichen Komponenten einer erfindungsgemäßen Schaltvorrichtung in einer perspektivischen Ansicht;
- Figur 2: eine geschnittene Seitenansicht der Schaltvorrichtung von Figur 1;
- Figur 3: ein Detail von Figur 2 im Bereich der Kopplung zwischen Primärwelle und Sekundärwelle;
- Figur 4: eine Seitenansicht der Primärwelle;
- Figur 5: eine perspektivische Ansicht der Primärwelle;
- Figur 6: eine geschnittene Ansicht der Sekundärwelle;
- Figur 7: eine perspektivische Ansicht der in Figur 6 gezeigten Sekundärwelle;
- Figur 8: einen Schnitt durch die in Figur 6 gezeigte Sekundärwelle,
- Figur 9: die Montage von Sekundärwelle und Primärwelle; und
- Figur 10: eine in Querrichtung geschnittene Ansicht der Schaltvorrichtung im Bereich der Kopplung zwischen Primärwelle und Sekundärwelle.

### Ausführliche Beschreibung der Zeichnung

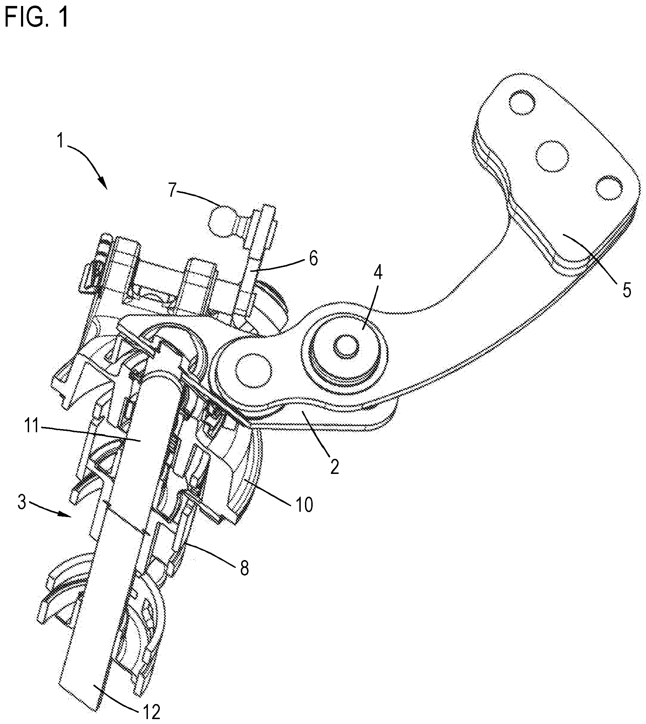

Die in Figur 1 gezeigte Schaltvorrichtung 1 ist Bestandteil eines Wechselgetriebes eines Kraftfahrzeugs. Die Schaltvorrichtung 1 umfasst einen Schalthebel 2, der drehfest mit einer Schaltwelle 3 verbunden ist. In Figur 1 erkennt man, dass der Schalthebel 2 näherungsweise rechtwinklig zur Schaltwelle 3 angeordnet ist, so dass über den Schalthebel 2, der an seiner Unterseite einen in der Ansicht von Figur 1 verdeckten Kugelzapfen aufweist, ein Drehmoment eingeleitet werden kann. Durch das aufgebrachte Drehmoment wird die Schaltwelle 3 um ihre Längsachse gedreht. An dem in Figur 1 verdeckten Kugelzapfen ist ein Seilzug befestigt, der mit einem Handschalthebel eines Kraftfahrzeugs verbunden ist.

Der Schalthebel 2 weist einen Tilger 4 mit einem Schaltgewicht 5 auf. Durch den Tilger 4 werden harte Endanschläge, die bei Schaltbetätigungen entstehen können, gedämpft. Der Tilger 4 ist so ausgelegt, dass die Übertragung von Schwingungen oder Vibrationen vom Getriebe über die Schaltvorrichtung 1 zu dem Handschalthebel im Fahrzeuginnenraum weitgehend verhindert oder unterdrückt wird.

Die Schaltvorrichtung 1 umfasst daneben einen Wählhebel 6, der ebenfalls mit einem Kugelzapfen 7 versehen ist, und der über einen zweiten Seilzug mit dem Handschalthebel verbunden ist. Bei einer Betätigung des Handschalthebels durch den Fahrer wird der Wählhebel 6 geschwenkt, wodurch die Schaltwelle 3 entlang ihrer Längsachse in eine Wählrichtung verschoben wird. Nachdem die richtige axiale Position erreicht ist, verdreht der Schalthebel 2 die Schaltwelle 3, wodurch ein Schaltvorgang durch eine auf der Schaltwelle 3 angeordnete Rastierhülse 8 oder durch eine Schalthülse 9 ausgelöst wird. In Figur 1 ist dargestellt, dass die Schaltwelle 3 ein Gehäuse 10 eines Schaltdoms durchsetzt.

Um zu verhindern, dass Schwingungen und Vibrationen vom Getriebe über Schaltgabeln auf Schaltfinger der Rastierhülsen übertragen werden, ist die Schaltwelle 3 in Längsrichtung geteilt ausgebildet und umfasst eine fest mit dem Schalthebel 2 verbundene Primärwelle 11 und eine Sekundärwelle 12, wobei Primärwelle 11 und Sekundärwelle 12 derart miteinander verbunden sind, dass ein eine Drehung um die Längsachse ermöglichendes Spiel vorhanden ist. Primärwelle 11 und Sekundärwelle 12 sind somit axial fest und in Umfangsrichtung, d. h. um ihre Längsachse zumindest geringfügig drehbar miteinander gekoppelt. Durch diese in Umfangsrichtung spielbehaftete Kopplung wird die unerwünschte Übertragung von Vibrationen und Schwingungen weitgehend unterbunden.

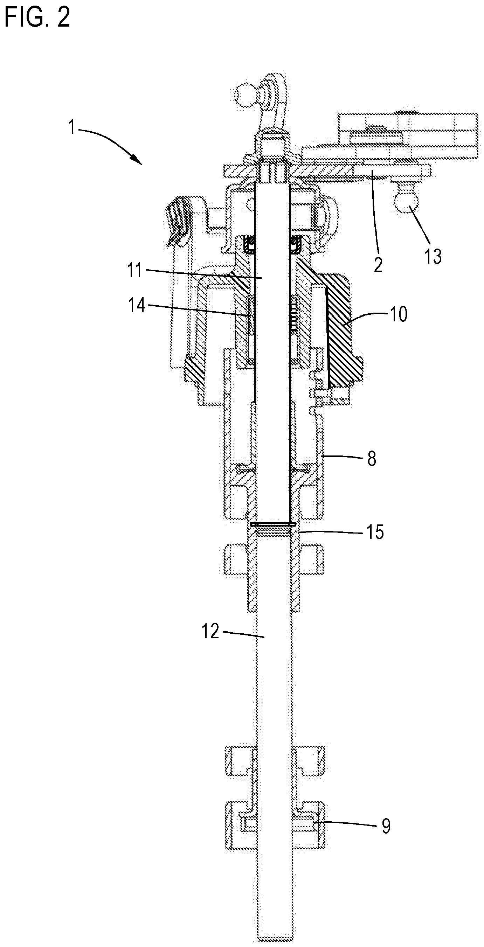

Figur 2 ist eine geschnittene Ansicht der Schaltvorrichtung 1. In Figur 2 ist der auf der Unterseite des Schalthebels 2 angeordnete Kugelzapfen 13 dargestellt, an dem im montierten Zustand ein Seilzug eingehängt ist.

In dem Gehäuse 10, das von der Primärwelle 11 durchsetzt wird, ist ein Lager 14, in dem dargestellten Ausführungsbeispiel ein Wälzlager, angeordnet, durch das die Primärwelle 11 in dem Gehäuse 10 drehbar gelagert ist.

Unterhalb des Gehäuses 10 befindet sich die Rastierhülse 8, die außenseitig einen Schaltfinger aufweist, der in der Ansicht von Figur 2 verdeckt ist. Die Primärwelle 11 und die Sekundärwelle 12 sind über eine Muffe 15, die als rohrförmiger Körper ausgebildet ist, in Axialrichtung fest miteinander gekoppelt. Im unteren Teil von Figur 2 ist die Sekundärwelle 12, die die Schalthülse 9 aufweist, dargestellt.

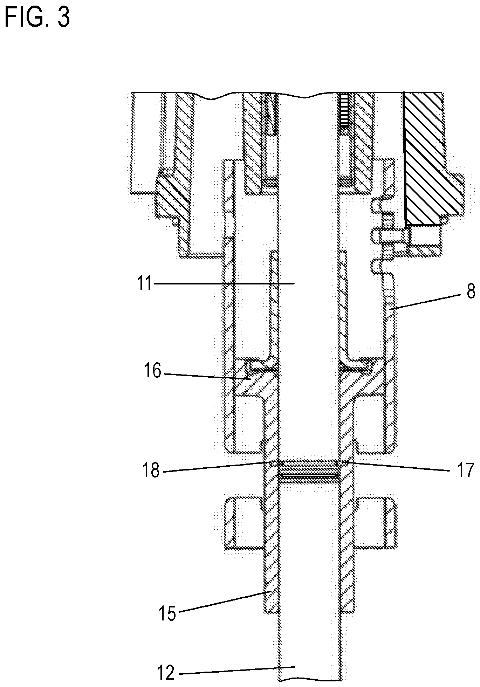

Figur 3 zeigt den Kopplungsbereich zwischen Primärwelle 11 und Sekundärwelle 12 in einem vergrößerten Maßstab. In diesem Ausführungsbeispiel ist die Muffe 15 fest mit der Sekundärwelle 12 verbunden, Das in Figur 3 dargestellte obere Ende 16 der Muffe 15 steht somit von der Sekundärwelle 12 ab und bildet eine Aufnahme für die Primärwelle 11. Zwischen der Primärwelle 11 und der Sekundärwelle 12 ist ein Sicherungselement 17 angeordnet, das in diesem Ausführungsbeispiel als Sicherungsring ausgebildet ist. Es sind auch andere Ausführungen denkbar, bei denen das Sicherungselement als Sprengring oder Nutenring ausgebildet sein kann. In der rohrförmigen Muffe 15 ist innenseitig eine Nut 18 ausgebildet, in die das Sicherungselement 17 eingreift. Gleichzeitig weist die Primärwelle 11 an ihrem unteren Ende eine in Umfangsrichtung verlaufende Nut auf, in die das Sicherungselement eingesetzt ist. Somit ist die Primärwelle 11 rotativ gegenüber der Sekundärwelle 12 und der mit dieser fest verbundenen Muffe 15 bewegbar.

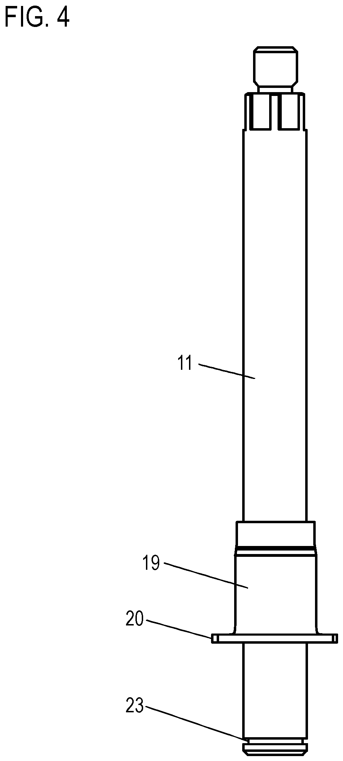

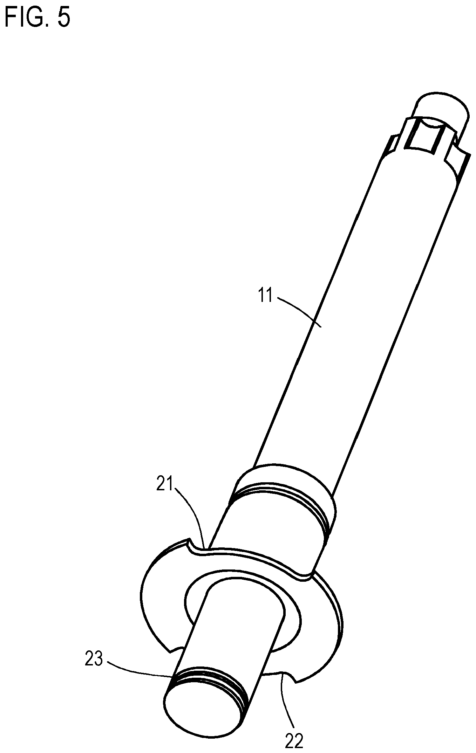

Die Figuren 4 und 5 zeigen die Primärwelle, wobei Figur 4 eine Seitenansicht und Figur 5 eine perspektivische Ansicht ist. Die Primärwelle 11 ist außenseitig in ihrem unteren Bereich mit einer Hülse 19 versehen, die drehfest mit der Primärwelle 11 verbunden ist. Die Hülse 19 weist einen sich radial von der Primärwelle 11 erstreckenden Bund 20 auf, der - wie am besten in Figur 5 erkennbar ist - zwei einander gegenüberliegende Ausnehmungen 21, 22 aufweist. Am unteren Ende der Primärwelle 11 erkennt man eine Nut 23, in die das Sicherungselement 17 im montierten Zustand eingreift.

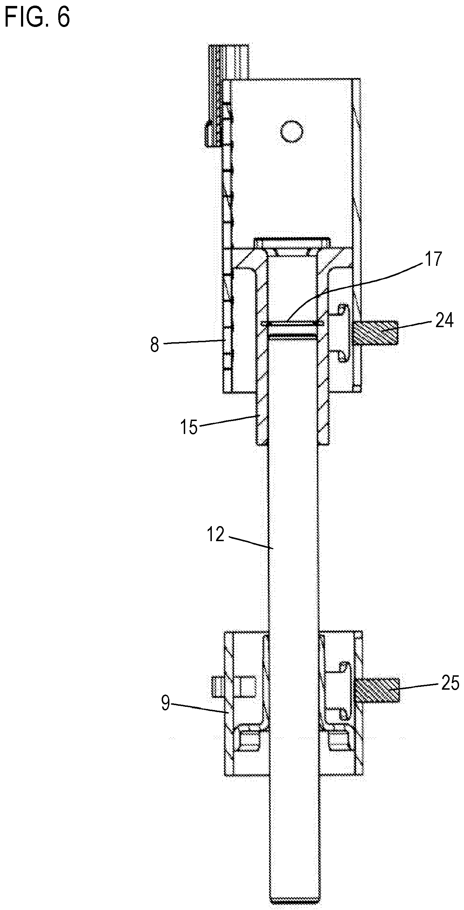

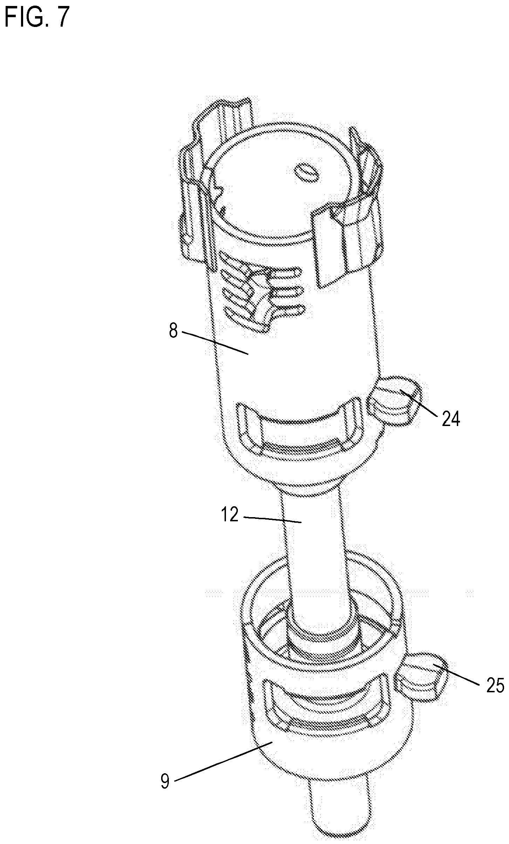

Die Figuren 6 und 7 zeigen die Sekundärwelle 12, wobei Figur 6 eine geschnittene Seitenansicht und Figur 7 eine perspektivische Ansicht ist. Die Rastierhülse 8 weist einen sich radial erstreckenden Schaltfinger 24 auf, die Schalthülse 9 weist einen sich radial erstreckenden Schaltfinger 25 auf.

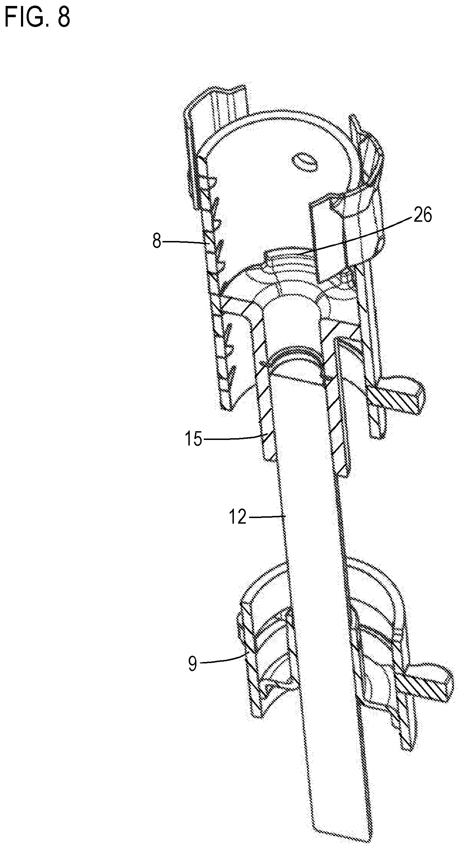

Figur 8 ist eine geschnittene Ansicht der Sekundärwelle 12 dort erkennt man, dass die als rohrförmiger Körper ausgebildete Muffe 15 auf ihrer Oberseite, im Inneren der Rastierhülse 8, einen Mitnehmer 26 aufweist, der entsprechend gegengleich zu einer Ausnehmung 21, 22 ausgebildet ist. Insgesamt weist die Muffe 15 zwei derartige gegenüberliegende Mitnehmer 26 auf, die so geformt sind, dass zwischen den Mitnehmern 26 und den Ausnehmungen 21, 22 in Umfangsrichtung Spiel vorgesehen ist. Dementsprechend ist die mit der Muffe 15 fest verbundene Sekundärwelle 12 zumindest geringfügig gegenüber der die Aussparungen aufweisenden Primärwelle 11 drehbar.

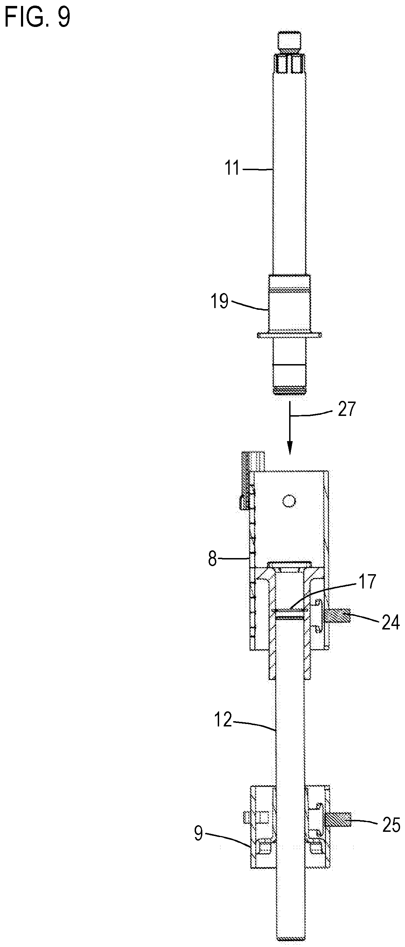

Figur 9 zeigt die Montage von Primärwelle 11 und Sekundärwelle 12. Das als Sicherungsring ausgebildete Sicherungselement 17 ist in der Muffe 15, die mit der Sekundärwelle 12 verbunden ist, vormontiert. Zur Montage wird die Primärwelle 11 lediglich in die durch den Pfeil 27 angegebene Richtung bewegt, bis die Primärwelle 11 in das Sicherungselement 17 einschnappt. Nach der Montage befindet sich das Sicherungselement in der umlaufenden Nut 18 der Primärwelle 11 und wird dort gehalten. Bei dieser Vorgehensweise ist der Sicherungsring in der rohrförmigen Muffe 15 vormontiert, alternativ kann er jedoch auch auf der Primärwelle 11 vormontiert sein, so dass die mit dem Sicherungselement versehene Primärwelle 11 in die mit der Sekundärwelle 12 verbundene Muffe 15 geschoben wird.

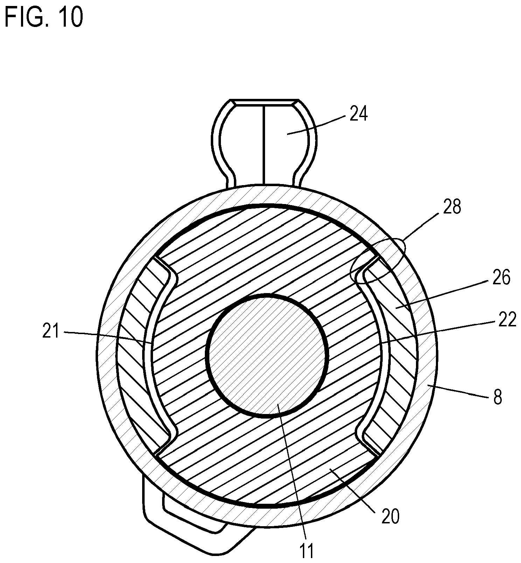

Figur 10 ist eine geschnittene Ansicht quer zur Längsrichtung im Bereich der Kopplung zwischen Primärwelle 11 und Sekundärwelle 12. Dort erkennt man, dass innerhalb der Rastierhülse 8 die Mitnehmer 26 angeordnet sind, die mit der Sekundärwelle 12 verbunden sind. Andererseits befindet sich in der Schnittebene der Bund 20 der Hülse 19, der die Ausnehmungen 21, 22 aufweist. Der Bund 20 ist fest mit der Primärwelle 11 gekoppelt. Im Bereich der Ellipse 28, die beispielhaft anzeigt, an welcher Stelle Spiel vorhanden ist, sind Primärwelle 11 und Sekundärwelle 12 gegeneinander in Umfangsrichtung geringfügig verdrehbar, wodurch die gewünschte Schaltabkopplung realisiert wird. Dementsprechend werden vom Getriebe stammende Vibrationen aufgrund des zwischen Mitnehmer 26 und den Ausnehmungen 21, 22 vorhandenen Spiels geschluckt.

### Bezugszahlenliste

- 1: Schaltvorrichtung
- 2: Schalthebel
- 3: Schaltwelle
- 4: Tilger
- 5: Schaltgewicht
- 6: Wählhebel
- 7: Kugelzapfen
- 8: Rastierhülse
- 9: Schalthülse
- 10: Gehäuse
- 11: Primärwelle
- 12: Sekundärwelle
- 13: Kugelzapfen
- 14: Lager
- 15: Muffe
- 16: Ende
- 17: Sicherungselement
- 18: Nut
- 19: Hülse
- 20: Bund
- 21: Ausnehmung
- 22: Ausnehmung
- 23: Nut
- 24: Schaltfinger
- 25: Schaltfinger
- 26: Mitnehmer
- 27: Pfeil
- 28: Ellipse

## Patentansprüche

1. Schaltvorrichtung (1) für ein Wechselgetriebe eines Kraftfahrzeugs, mit einer Schaltwelle (3), die entlang ihrer Längsachse in eine Wählrichtung verschiebbar und mittels eines Schalthebels (2) um ihre Längsachse in eine Schaltrichtung drehbar ist, wobei die Schaltwelle (3) in Längsrichtung geteilt ausgebildet ist und eine fest mit dem Schalthebel (2) verbundene Primärwelle (11) und eine fest mit wenigstens einer Schalthülse (9) und/oder mit wenigstens einer Rastierhülse verbundene Sekundärwelle (12) aufweist, **dadurch gekennzeichnet, dass** die Primärwelle (11) und die Sekundärwelle (12) derart miteinander verbunden sind, dass zwischen den beiden Wellen (11, 12) ein eine Drehung um die Längsachse ermöglichendes Spiel vorhanden ist.

2. Schaltvorrichtung nach Anspruch 1, **dadurch gekennzeichnet, dass** die Primärwelle (11) und die Sekundärwelle (12) über eine Muffe (15) miteinander gekoppelt sind, die entweder mit der Primärwelle (11) oder mit der Sekundärwelle (12) fest verbunden ist.

3. Schaltvorrichtung nach Anspruch 2, **dadurch gekennzeichnet, dass** die Primärwelle (11) oder die Sekundärwelle (12) eine Nut (18) aufweist, in die ein Sicherungselement (17) einsetzbar oder eingesetzt ist, durch das die Welle mit der Muffe (15) verbunden ist.

4. Schaltvorrichtung nach Anspruch 3, **dadurch gekennzeichnet, dass** das Sicherungselement (17) als Sicherungsring oder Sprengring oder Nutenring ausgebildet ist.

5. Schaltvorrichtung nach einem der Ansprüche 2 bis 4, **dadurch gekennzeichnet, dass** die mit der Primärwelle (11) oder der Sekundärwelle (12) gekoppelte Muffe (15) einen Mitnehmer (26) aufweist, der in eine Ausnehmung (21, 22) eines sich radial von der anderen Welle erstreckenden Bunds (20) eingreift, wobei zwischen dem Mitnehmer (26) und der Ausnehmung (21, 22) Spiel vorhanden ist.

6. Schaltvorrichtung nach Anspruch 5, **dadurch gekennzeichnet, dass** der Bund (20) Bestandteil einer fest mit der jeweiligen Welle, verbundenen Hülse (19) ist.

7. Schaltvorrichtung nach Anspruch 6, **dadurch gekennzeichnet, dass** der Bund (20) Bestandteil der Primärwelle (11) ist.

8. Schaltvorrichtung nach einem der Ansprüche 5, 6 oder 7, **dadurch gekennzeichnet, dass** die Muffe (15) mehrere Mitnehmer (26) und der Bund (20) eine entsprechende Anzahl Ausnehmungen (21, 22) aufweist.

9. Schaltvorrichtung nach Anspruch 8, **dadurch gekennzeichnet, dass** die Muffe (15) zwei einander gegenüberliegende Mitnehmer (26) und der Bund (20) zwei gegenüberliegende Ausnehmungen (21, 22) aufweist.

## Claims

1. A shifting device (1) for a change speed gearbox of a motor vehicle, having a shifting shaft (3) which is displaceable along its longitudinal axis in a selective direction and rotatable about its longitudinal axis in a switching direction by means of a shift lever (2), wherein the shift shaft (3) is divided in the longitudinal direction and has a primary shaft (11) connected to the shift lever (2) and a secondary shaft (12) connected to at least one switching sleeve (9) and/or at least one latching sleeve, **characterised in that** the primary shaft (11) and the secondary shaft (12) are interconnected such that, between the two shafts (11, 12), there is a clearance enabling rotation about the longitudinal axis.

2. The shifting device according to claim 1, **characterised in that** the primary shaft (11) and the secondary shaft (12) are coupled together via a bushing (15), which is fixedly connected either to the primary shaft (11) or to the secondary shaft (12).

3. The shifting device according to claim 2, **characterised in that** the primary shaft (11) or the secondary shaft (12) has a groove (18) into which a securing element (17) is insertable or inserted, through which the shaft is connected to the bushing (15).

4. The shifting device according to claim 3, **characterised in that** the securing element (17) is designed as a securing ring or snap ring or grooved ring.

5. The shifting device according to any one of claims 2 to 4, **characterised in that** the bushing (15) coupled with the primary shaft (11) or the secondary shaft (12) has a driver (26), which engages in a recess (21, 22) of a collar (20) extending radially from the other shaft, wherein there is clearance between the driver (26) and the recess (21, 22).

6. The shifting device according to claim 5, **characterised in that** the collar (20) is part of a sleeve (19) that is fixedly connected to the respective shaft.

7. The shifting device according to claim 6, **characterised in that** the collar (20) is part of the primary shaft (11).

8. The shifting device according to any one of claims 5, 6, or 7, **characterised in that** the bushing (15) has multiple drivers (26) and the collar (20) has a corresponding number of recesses (21, 22).

9. The shifting device according to claim 8, **characterised in that** the bushing (15) has two mutually opposing drivers (26) and the collar (20) has two opposing recesses (21, 22).

## Revendications

1. Dispositif de changement de vitesse (1) pour une boîte de vitesses d'un véhicule à moteur, comprenant un arbre de commande (3) pouvant être déplacé le long de son axe longitudinal dans une direction de sélection et au moyen d'un levier de changement de vitesse (2) pouvant tourner autour de son axe longitudinal dans une direction de changement de vitesse, l'arbre de commande (3) étant divisé dans le sens longitudinal et comportant un arbre primaire (11) relié à demeure au levier de changement de vitesse (2) et un arbre secondaire (12) relié à demeure au moins à une douille de changement de vitesse (9) et/ou à au moins une douille de blocage, **caractérisé en ce que** l'arbre primaire (11) et l'arbre secondaire (12) sont reliés l'un à l'autre de manière à créer un jeu entre les deux arbres (11, 12) qui permet la rotation autour de l'axe longitudinal.

2. Dispositif de changement de vitesse selon la revendication 1, **caractérisé en ce que** l'arbre primaire (11) et l'arbre secondaire (12) sont accouplés ensemble par un manchon (15), qui est relié à demeure soit à l'arbre primaire (11) soit à l'arbre secondaire (12).

3. Dispositif de changement de vitesse selon la revendication 2, **caractérisé en ce que** l'arbre primaire (11) ou l'arbre secondaire (12) présente une gorge (18) dans laquelle vient s'insérer ou est inséré un élément de fixation (17), qui permet de relier l'arbre au manchon (15).

4. Dispositif de changement de vitesse selon la revendication 3, **caractérisé en ce que** l'élément de fixation (17) est conçu sous la forme de bague de blocage, de bague de retenue ou de bague à encoche.

5. Dispositif de changement de vitesse selon l'une des revendications 2 à 4, **caractérisé en ce que** le manchon (15) accouplé à l'arbre primaire (11) ou à l'arbre secondaire (12) présente un entraîneur (26) qui s'insère dans un évidement (21, 22) d'un collier (20) s'étendant radialement depuis l'autre arbre, un jeu étant présent entre l'entraîneur (26) et l'évidement (21, 22).

6. Dispositif de changement de vitesse selon la revendication 5, **caractérisé en ce que** le collier (20) fait partie d'une douille (19) reliée à l'arbre respectif.

7. Dispositif de changement de vitesse selon la revendication 6, **caractérisé en ce que** le collier (20) fait partie de l'arbre primaire (11).

8. Dispositif de changement de vitesse selon l'une des revendications 5, 6 ou 7, **caractérisé en ce que** le manchon (15) présente une pluralité d'entraîneurs (26) et le collier (20) présente un nombre correspondant d'évidements (21, 22).

9. Dispositif de changement de vitesse selon la revendication 8, **caractérisé en ce que** le manchon (15) présente deux entraîneurs opposés (26) et le collier (20) présente deux évidements opposés (21, 22).
